# EUROPEAN PATENT APPLICATION

(11) **EP 3 930 040 A1**
(43) Date of publication of application: **29.12.2021**
(21) Application number: 20759620.6
(22) Date of filing: 20.01.2020
(51) Int. Cl.: H01M 4/13, H01M 4/139, H01M 4/62, H01M 4/80, H01G 11/24, H01G 11/48, H01G 11/86, H01M 10/052, H01M 10/0562

(54) **ELECTRODE OF POWER STORAGE DEVICE USING SOLID ELECTROLYTE, POWER STORAGE DEVICE, AND PRODUCTION METHOD FOR POSITIVE ELECTRODE LAYER OR NEGATIVE ELECTRODE LAYER OF POWER STORAGE DEVICE**

(30) Priority: 20.02.2019 JP 2019028821
(71) Applicant: Shenzhen I&T Micro Aluminium Technology Co., Ltd., Shenzhen, Guangdong 518027 (CN)
(72) Inventor: HASUO, Shunji, Yanagawa, Fukuoka 832-0088 (JP)
(74) Representative: Biggi, Cristina
(86) International application number: PCT/IB2020/050399
(87) International publication number: WO 2020/170048

(57) **Abstract**

Influence of expansion and shrinkage of an electrode of an electrical storage device can be reduced, and battery characteristics thereof are maintained. The electrode (2, 4) of the electrical storage device contains: a metal fiber (A); an adsorbing substance powder or an active substance powder (11, 21) contacted with the metal fiber (A), the adsorbing substance powder being an adsorbing substance powder which adsorbs electrolyte ions during charging and discharging, and the active substance powder being an active substance powder which is subjected to a chemical reaction during charging and discharging; and a powdery solid electrolyte (14, 24) contacted with the metal fiber (A).

## Description

### Technical Field

The present disclosure relates to an electrode for an electrical storage device utilizing a solid electrolyte, the electrical storage device and a method for manufacturing a cathode layer or an anode layer of the electrical storage device.

### Background

Aiming at cutting down energy and preventing global warming, a secondary battery is in use in various fields, in particular, electric energy is used in an automobile industry, such that researches and development related to the secondary battery are accelerating. Therefore, in recent years, in development of a next generation storage battery, researches on metal air batteries, sodium ion batteries, lithium ion batteries, magnesium ion batteries and the like prevail.

Lithium ion batteries (also known as LiB below) are secondary batteries which are used most frequently in recent years, wherein the voltages capable of being used reach up to 3.5-3.7 V compared with previous nickel-metal hydride batteries and the like.

The LiB is primarily comprised of a cathode, an anode, a diaphragm and an electrolyte. For example, generally speaking, the cathode is manufactured by kneading the active substance powder (generally a lithium-containing oxide), a conductive additive as an additive and a binder (known as the active material slurry below); and coating a mixture which is about 100 µm thick as the collecting electrode to an aluminum foil which is about 20 µm thick. The anode is obtained by coating a carbon material onto a copper foil as a collector. They are separated by means of the diaphragm such as polyethylene and are impregnated in the electrolyte to form the LiB. For example, such lithium ion secondary battery has been disclosed in a patent document 1.

Charge and discharge are carried out as lithium ions move between the cathode and the anode. During charge, the lithium ions move from the cathode to the anode, and charge is finished in a state that the lithium ions turning into the cathode disappear or a state in which the lithium ions cannot be received continuously in the cathode. The condition is on the contrary during discharge.

Although LiB has been most frequently used in recent years, an electrolyte salt (usually LiPF6) contained in an electrolyte solvent can be a combustible liquid, such that structures which do not induce ignition or liquid leakage are needed. Furthermore, it is also considered that the organic serial electrolyte induces decomposition of anions or various dissident molecules at the interface of the cathode, and thus, the service life of the LiB is shortened. Thus, it is attempted to replace the electrolyte with the solid electrolyte. As the cathode layer, the anode layer and the electrolyte layer all are comprised of solids, the battery is also referred as to a full-solid battery. The full-solid battery is not limited to constitutive substances of original LiB. There are usually many researches on solidification of the electrolyte of the LiB, such that the full-solid battery means the full-solid LiB mostly.

The full-solid battery has the advantages that as the electrolyte layer is flame-retardant, the battery is safe; as the lithium ions move in the electrolyte layer, it is hard to carry out side reactions with anions or solvent molecules, and therefore, the service life is longer; and as the electrolyte layer is not a liquid, the using temperature range is wide and the like.

In addition, under a condition of obtaining a high capacity and high voltage battery with the LiB, it must connect one single battery to a plurality of batteries. If the solid electrolyte layer is used, the cathode layer, the solid electrolyte layer and the anode layer are overlapped in sequence, such that the solid electrolyte layer has the advantage of being capable of manufacturing the battery with high energy density.

Thus, compared with the LiB, the battery has various advantages. Therefore, in recent years, many researches on electrolyte, cathode and anode of the solid battery have been conducted. However, there are still topics. For example, there are a problem of capacity deterioration induced by expansion and shrinkage of the active substances during charge-discharge cycles and a problem of stripping the active substances from the collector.

Charge and discharge of the full-solid battery are carried out by Li de-intercalation, and at the moment, a crystal lattice serving as a main body is expanded and shrunk repeatedly. If the volume change induced thereby is large, contact among particles of the active substances, the solid electrolyte and the conductive additive is disconnected, such that the amount of the active substances is reduced effectively. Under the condition of being the full-solid battery, even if the battery is charged and discharged with a current which is about 1/10-1/20 of the battery capacity repeatedly, nearly 1 mole of Li is de-intercalated. The volume expansion and shrinkage rates of the full-solid battery also reach approximately 10%. Thus, various methods for inhibiting expansion and shrinkage of the full-solid battery are provided.

In order to solve the problem, various researches have been conducted. For example, a conductive elastomer is configured in a single battery compartment in the patent literature 2 to inhibit expansion and shrinkage, a buffer layer is arranged on the periphery of the battery in the patent literature 3, the voidage is controlled in the patent literature 4 and the like.

### Prior art literature

### Patent literature

Patent literature 1: Japanese laid-open patent publication No. 2007-123156
Patent literature 2: Japanese laid-open patent publication No. 2008-311173
Patent literature 3: Japanese laid-open patent publication No. 2015-111532
Patent literature 4: Japanese patent No. 5910737

### Summary

### The topic to be solved by the present disclosure

However, in configuration of the elastomer of the short battery compartment in the patent literature 2, it is hard to backfill a gap generated by expansion and shrinkage of the cathode or the anode and the solid electrolyte. In a structure where the elastomer is configured between the current collector and the solid cathode layer or the solid anode layer, although longitudinal expansion and shrinkage may be inhibited, there are still problems on transverse expansion and shrinkage. As an elastomer layer which is 20-30 µm is used, the integral thickness is increased. Similarly, it is also necessary to arrange the glass layer or the buffer layer too in the patent literature 3 with integral cost problems on the thickness or manufacture. There are problems in the patent literature 4 on technology such as control of voidage of the two layers or problems on time and cost.

On the other hand, in recent years, in the LiB, in order to increase the capacity, development on batteries taking Si as the anode has been conducted, too. But the volume expansion of Si during charge is about 4 times. Researches on utilization of Si are further conducted in the solid battery. But the volume expansion of the solid battery herein becomes a topic, too.

For example, when LiCoOz is taken as the cathode active substance and Si is used as the anode, it can be expected that the energy density is about 400 Wh/kg (650 Wh/L). Development on batteries with energy density like this is being conducted, but, expansion and shrinkage of the material in charge and discharge will be generated. Thus, even if in the structure, it is forced to need to change the binder or the electrode structure.

In view of the condition, it is thereof an object of the present disclosure to reduce influence of expansion and shrinkage of an electrode of an electrical storage device, and battery characteristics thereof are maintained.

### A scheme for solving the topic

The electrode of an electrical storage device in the first mode of the present disclosure includes a metal fiber; an adsorbing substance powder or an active substance powder contacted with the metal fiber, the adsorbing substance powder being an adsorbing substance powder which adsorbs electrolyte ions during charging and discharging, and the active substance powder being an active substance powder which is subjected to a chemical reaction during charging and discharging; and a powdery solid electrolyte contacted with the metal fiber.

The composition is favorable to maintain electrical contract of the active substance powder, the solid electrolyte and the metal fiber during expansion or shrinkage of the electrode during charging and discharging.

The electrode of the electrical storage device in a second mode of the present disclosure includes a cathode layer, the cathode layer including: a metal fiber; an adsorbing substance powder or an active substance powder contacted with the metal fiber and a powdery solid electrolyte contacted with the metal fiber, the adsorbing substance powder being an adsorbing substance powder which adsorbs electrolyte ions during charging and discharging, and the active substance powder being an active substance powder which is subjected to a chemical reaction during charging and discharging; an anode layer, the anode layer including: a metal fiber; an adsorbing substance powder or an active substance powder contacted with the metal fiber and a powdery solid electrolyte contacted with the metal fiber, the adsorbing substance powder being an adsorbing substance powder which adsorbs electrolyte ions during charging and discharging, and the active substance powder being an active substance powder which is subjected to a chemical reaction during charging and discharging; and a solid electrolyte layer, the solid electrolyte layer including the powdery solid electrolyte, and the solid electrolyte layer being configured between the cathode layer and the anode layer and being contacted with the cathode layer and the anode layer.

The metal fiber deforms elastically, and therefore, the cathode layer and the anode layer further affect elasticity of the metal fiber, too. That is, the cathode layer is likely to expanding and shrinking following the anode layer, and the anode layer is further likely to expanding and shrinking following the cathode layer.

A method for manufacturing the cathode layer or the anode layer of the electrical storage battery in a third mode of the present disclosure includes: a slurry manufacturing step: manufacturing liquid state or gelatinous slurry, the slurry including a metal fiber of short fiber with an average length less than 25 mm, an adsorbing substance powder adsorbing the electrolyte ions during charging and discharging or the active substance powder subjected to a chemical reaction during charging and discharging, the powdery solid electrolyte and a binder; a shaping step: shaping the slurry into a predetermined shape; and a drying step: at least drying the slurry shaped into the predetermined shape to form the cathode layer or the anode layer.

A method for manufacturing a cathode layer or an anode layer of an electrical storage battery in a fourth mode of the present disclosure includes: a sheet forming step: manufacturing a sheet of a metal fiber of a long fiber with an average length greater than 25 mm; a slurry manufacturing step: manufacturing liquid state or gelatinous slurry, the slurry including an adsorbing substance powder adsorbing the electrolyte ions during charging and discharging or an active substance powder subjected to a chemical reaction during charging and discharging, the powdery solid electrolyte and a binder; a guiding step: guiding the slurry into the sheet metal fiber; and a drying step: at least drying the slurry to form the cathode layer or the anode layer.

### Effects of the present disclosure

According to the present disclosure, influence of expansion and shrinkage of an electrode of an electrical storage device can be reduced, and battery characteristics thereof are maintained. In addition, the current collector is electrically connected with the active substance powder well by blending the conductive metal fiber, and influence of expansion and shrinkage of the electrode is reduced due to the elastic force of the fiber itself.

### Brief Description of the Drawings

Fig. 1 is a section schematic diagram of the electrical storage device utilizing the solid electrolyte of an embodiment.
Fig. 2 is a schematic diagram of the method for manufacturing the metal fiber of an embodiment.
Fig. 3 is a schematic diagram of the method for forming the slurry of an embodiment.
Fig. 4 is a schematic diagram of other methods for forming the slurry of an embodiment.

It should be noted that the drawings are diagrams representing composition of the embodiment easily understandably, and size, thickness, length and the like of the metal fiber, the active substance powder, the conductive additive, the solid electrolyte are different from those in an actual condition.

### Detailed Description of the Embodiments

An example of the full-solid lithium ion secondary battery is listed below to describe the electrical storage device (full-solid battery) of one embodiment. It should be noted that the embodiment can be used for full-solid batteries such as a full-solid sodium ion secondary battery, a full-solid magnesium ion secondary battery and an air battery utilizing the solid electrolyte or a full-solid lithium ion secondary battery utilizing the Si (silicon) anode with severe expansion and shrinkage.

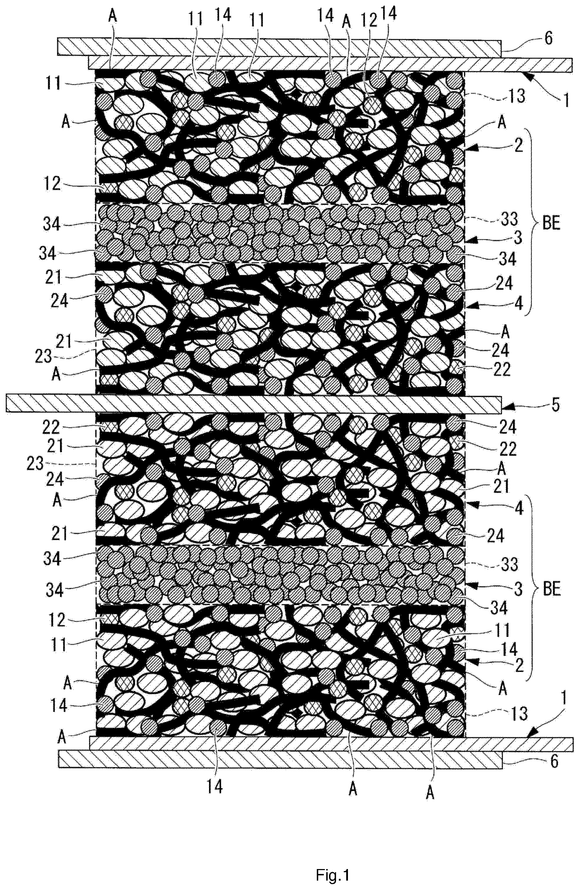

The example of the schematic diagram of the structure of the full-solid battery is as shown in the Fig. 1. The full-solid battery is substantially comprised of the cathode current collector 1, the cathode layer 2, the solid electrolyte layer 3, the anode layer 4 and the cathode current collector 5. The cathode layer 2, for example, includes the cathode active substance, the conductive additive and the binder, and the anode layer 4, for example, includes the anode active substance, the conductive additive and the binder.

### (Current collector foil)

The cathode current collector 1 is usually a metal foil, and the metal foil can be formed by aluminum or an alloy formed by a plurality of metals and the like. The anode current collector 5 is often a copper foil usually. This is because a forming potential of an Al-Li alloy is lower than a working potential of anode graphite under a condition that the anode current collector 5 is the aluminum foil, thereby, forming the Al-Li alloy on the anode. Thus, if the anode active substance is an active substance higher than the working potential or a nonreactive active substance such as active substance like lithium titanate, the aluminum foil can be used on the cathode current collector 5. Under a condition of the full-solid battery, sometimes conductive materials such as SUS (stainless steel) and a cobalt-based alloy with high voltage resistance and corrosion resistance, other conductive materials, a conductive ceramic and the like are used.

### (Cathode layer)

The cathode active substance powder 11 is preferably a substance easy to adsorb lithium ions to improve the discharge capacity, for example, LiCoPO, LiCoO₂, LiMnO₄, LiFePO₄ and the like. As required, the conductive additive 12, the binder 13 and the powdery solid electrolyte 14 such as an inorganic solid electrolyte for improving conductivity of ions and a high molecular electrolyte are added, and are sintered, pressurized and formed to form the cathode layer. In the embodiment, the cathode layer contains the metal fiber formed by aluminum, copper and the like. The method for manufacturing the cathode layer is described specifically below.

### (Anode layer)

The material of the anode active substance powder 21 is preferably a substance easy to adsorb ions to improve the discharge capacity like the cathode layer, for example, substances such as LiFePO₄, Li₄Ti₅O₁₂, Li₄Fe₄(PO₄)₃, SiOₓ, Cu₆Sn₅ and LiTiO₄. The anode layer is formed by the following process: the anode active substance powder 21, the conductive additive 22, the binder 23 and the powdery solid electrolyte 24 such as an inorganic solid electrolyte for improving conductivity of ions and a high molecular electrolyte are added, and are sintered, pressurized and formed. In the embodiment, the cathode layer and the anode layer contain the metal fiber A formed by aluminum, copper and the like. The method for manufacturing the cathode layer and the anode layer is described specifically below.

### [Formation of the metal fiber]

The metal fiber can be manufactured by the methods recorded in the Japanese laid-open patent publication No. 6209706 and Japanese laid-open patent publication No. 2018-106846. As the metal fiber, a short fiber with the average length less than 25 mm can be used and a long fiber with the average length greater than 25 mm can be used.

### (Formation of the short fiber)

As an example of the metal fiber A of the short fiber of aluminum or copper, the average length is less than 25 mm, further preferably less than 15 mm, more preferably less than 5 mm, and an average wire diameter is less than 50 µm, further preferably less than 25 µm. The metal fiber A further can be other metal materials. For example, the metal fiber A of aluminum or copper is formed by the chatter cutting method or the milling cutter cutting method in which a cutting tool is contacted with a cylindrical part of aluminum or copper with a round section. The metal fiber of aluminum or copper with the wire diameter and the length can be further formed by other methods.

As far as other methods are concerned, the coil cutting method can be used. Under the condition of utilizing the coil cutting method, a metal sheet is wound to a coil shape first and the end surface of the coil is cut, thereby obtaining the stripe-like metal fiber. Then, the stripe-type metal fiber A is cut off to the length, thereby obtaining the metal fiber A as the short fiber.

As far as other methods are concerned, the metal fiber A with the length can be also manufactured by blowing metals such as melted aluminum to the space from the micropores.

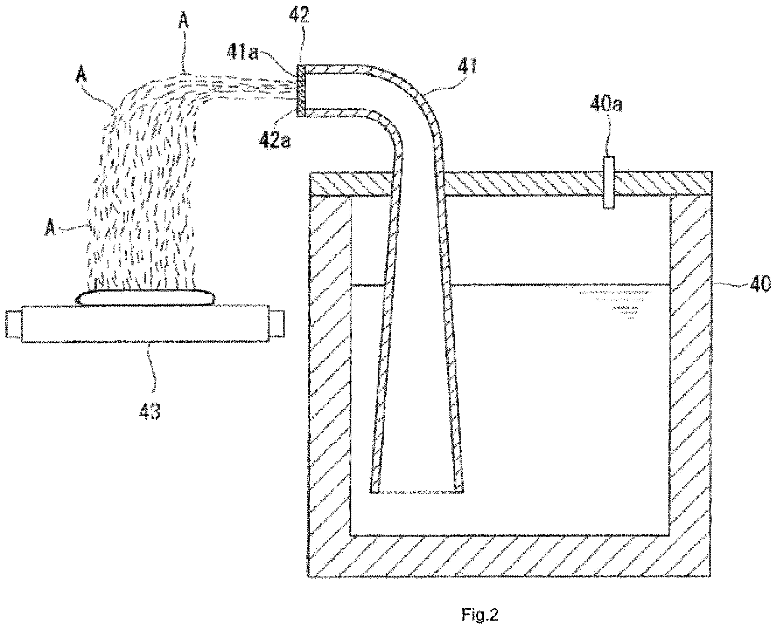

For example, as shown in the Fig. 2, melted aluminum is prepared in the closed container 40 into which the rear part of the bended pipe 41 is inserted, and the bended pipe 41 is bended at the front end and formed by a ceramic, stainless steel and the like, in a state that the front end portion of the bended pipe 41 stretches out of the closed container 40, the pressure in the closed container 40 is increased by injecting air or inert gases from the gas guiding pipe 40a, such that the melted aluminum ascends the rear part of the bended pipe 41 to reach the front end portion. If the opening portion 41a at the front end of the bended pipe 41 is provided with the nozzle 42 with a plurality of micropores 42a with the bore diameters ranging from several µm to several mm, the melted aluminum is blown to the space from the micropores 42a. As far as aluminum is concerned, aluminum with purity of over 99.9% is further preferably used in easy machining aspect, aluminum with purity of over 99.99% is more preferably used in easy machining aspect, and an alloy of other metals can be used, too. The space can be either filled with air or filled with inert gases such as nitrogen or other gases.

In the embodiment, the nozzle 42 is configured by way of blowing aluminum toward the substantially horizontal direction, and aluminum can be further blown toward other directions such as a downward direction. Thus, aluminum from the micropores 42a of the nozzle 42 splashes transversely in the space and is cooled to form the aluminum short fiber.

### (Formation of the long fiber)

As an example of the metal fiber A of the long fiber of aluminum or copper, the average length is greater than 25 mm, further preferably greater than 35mm, more preferably greater than 45mm, and the average wire diameter is less than 50 µm, further preferably less than 25 µm. The metal fiber A further can be other metal materials. For example, the metal fiber A of aluminum or copper is manufactured by utilizing the coil cutting method. Under the condition of utilizing the coil cutting method, a metal sheet is wound to a coil shape first and the end surface of the coil is cut, thereby obtaining the stripe-like metal fiber. Then, the stripe-type metal fiber is cut off to the length, thereby obtaining the metal fiber A as the long fiber. The metal fiber A of aluminum or copper with the wire diameter and the length can be further formed by other methods.

As far as other methods are concerned, the metal fiber A as the long fiber can be also manufactured by blowing metals such as melted aluminum to the space from the micropores.

By utilizing the device for manufacturing the short fiber of aluminum and altering a condition of blowing aluminum, the metal fiber A with the length can be manufactured.

### [Formation of the cathode layer when the metal fiber A as the short fiber is used]

First, the liquid state or gelatinous slurry S including the metal fiber A, the cathode active substance powder 11 which is subjected to a chemical reaction during charging and discharging, the conductive additive 12, the binder 13 and the solid electrolyte 14 is manufactured. The slurry S is prepared by blending and kneading a mixture of the metal fiber A of aluminum or copper, the cathode active substance powder 11, the conductive additive 12, the diluted binder 13 and the solid electrolyte 14. The average length of the metal fiber A of aluminum or copper is less than 25 mm, such that it is easy to mix the metal fiber A of aluminum or copper, the cathode active substance powder 11, the conductive additive 12, the diluted binder 13 and the solid electrolyte 14 in the slurry S. If the average length of the metal fiber A is less than 15 mm, more preferably less than 5 mm, it is tended to mix more easily.

Then, pre-drying is conducted to improve the viscosity of the slurry S. Pre-drying enables the binder 13 to be dried to an incompletely cured state, such that the slurry is easily formed into a predetermined shape, and therefore, pre-drying can be omitted according to the viscosity of the binder 13.

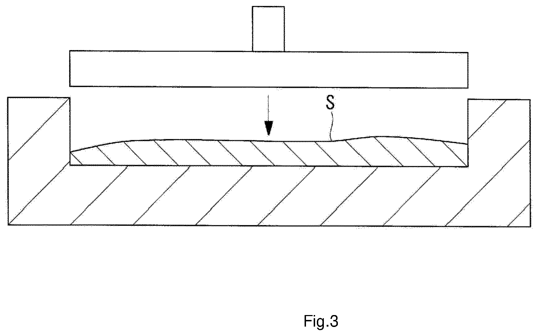

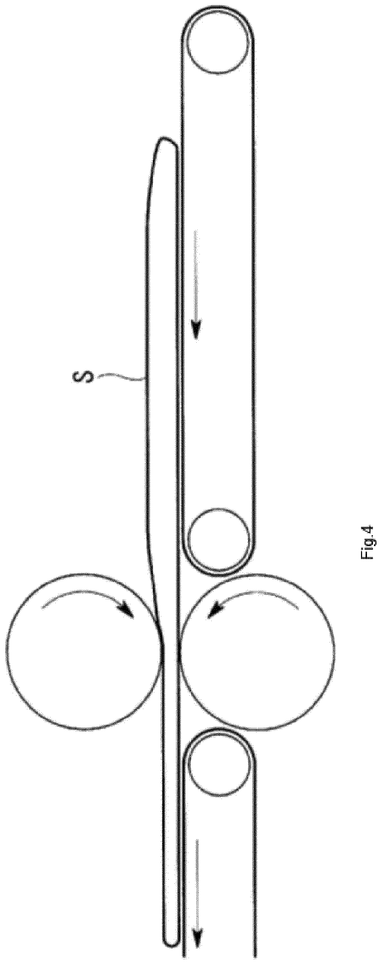

Then, as shown in the Fig. 3, the slurry S is placed in a die, and the slurry S is pressurized. Thus, the slurry S is formed with a predetermined thickness corresponding to the dimension of the electrode and the like. It should be noted that as shown in the Fig. 4, by pressurizing the slurry S by means of a pair of rollers, the slurry S can be shaped to a predetermined thickness and the like corresponding to the dimension of the electrode. After the thickness of the slurry S is adjusted by using the die or the roller, the slurry S is cut off to form into the predetermined shape (size). The slurry S can be further shaped into the predetermined shape by coating the slurry S onto the surface of the cathode current collector 1 in the thickness direction.

Then, the drying step of the formed slurry S by vacuum drying and the like is conducted. Thus, the binder 13 in the slurry S is cured. Thus, a state in which the cathode active substance powder 11 and the solid electrolyte 14 in the slurry S are contacted with the metal fiber A is formed. It should be noted that the contacted state does not mean that all of the cathode active substance powder 11 is contacted with the metal fiber A. Even if a part of cathode active substance powder 11 is contacted with the metal fiber A, the contacted state is formed, too. Similarly, even if a part of solid electrolyte 14 is contacted with the metal fiber A, the contacted state is formed, too.

It should be noted that the content (weight%) of the cathode active substance powder 11 and the solid electrolyte 14 in the cathode layer 2 is preferably over 85 weight%, more preferably over 90 weight%. The content of the cathode active substance powder 11 is preferably over 70 weight%, more preferably over 75 weight%. On the other hand, the content of the solid electrolyte 14 is preferably over 10 weight%, more preferably over 15 weight%. The content (weight%) of the metal fiber A in the cathode layer 2 is preferably over 3 weight%, more preferably over 5 weight% and preferably less than 8%. Besides, the cathode layer is occupied by the conductive additive 22, the binder 23 and the like.

### [Formation of the anode layer when the metal fiber A as the short fiber is used]

First, the liquid or gelatinous slurry S including the metal fiber A, the anode active substance powder 21 which is subjected to a chemical reaction during charging and discharging, the conductive additive 22, the binder 23 and the solid electrolyte 24 is manufactured. The slurry S is prepared by blending and kneading a mixture of the metal fiber A of aluminum or copper, the anode active substance powder 21, the conductive additive 22, the diluted binder 23 and the solid electrolyte 24.

Then, pre-drying is conducted to improve the viscosity of the slurry S. Pre-drying enables the binder 23 to be dried to an incompletely cured state, such that the slurry is easily formed into a predetermined shape, and therefore, pre-drying can be omitted according to the viscosity of the binder 23.

Then, as shown in the Fig. 3, the slurry S is placed in a die, and the slurry S is pressurized. Thus, the slurry S is formed with a predetermined thickness corresponding to the dimension of the electrode and the like. It should be noted that as shown in the Fig. 4, by pressurizing the slurry S by means of a pair of rollers, the slurry S can be shaped to a predetermined thickness and the like corresponding to the dimension of the electrode. After the thickness of the slurry S is adjusted by using the die or the roller, the slurry S is cut off to form into the predetermined shape (size). The slurry S can be further shaped into the predetermined shape by coating the slurry S onto the surface of the anode current collector 5 in the thickness direction.

Then, the drying step of the formed slurry S by vacuum drying and the like is conducted. Thus, the binder 13 in the slurry S is cured. Thus, a state in which the cathode active substance powder 21 and the solid electrolyte 24 in the slurry S are contacted with the metal fiber A is formed. It should be noted that the contacted state does not mean that all of the anode active substance powder 21 is contacted with the metal fiber A. Even if a part of anode active substance powder 21 is contacted with the metal fiber A, the contacted state is formed, too. Similarly, even if a part of solid electrolyte 24 is contacted with the metal fiber A, the contacted state is formed, too.

It should be noted that in the cathode layer 2 and the anode layer 4, the adsorbing substance powder adsorbing electrolyte ions during charging and discharging can be used to replace the active substance powder 11 and 21.

It should be noted that the content (weight%) of the anode active substance powder 21 and the solid electrolyte 24 in the anode layer 4 is preferably over 85 weight%, more preferably over 90 weight%. The content of the cathode active substance powder 11 is preferably over 70 weight%, more preferably over 75 weight%. On the other hand, the content of the solid electrolyte 24 is preferably over 10 weight%, more preferably over 15 weight%. The content (weight%) of the metal fiber A in the anode layer 4 is preferably over 3 weight%, more preferably over 5 weight% and further preferably less than 8%. Besides, the cathode layer is occupied by the conductive additive 22, the binder 23 and the like.

### [Formation of the cathode layer when the metal fiber A as the long fiber is used]

First, the metal fiber A is manufactured to a sheet such as a nonwoven fabric. Then, the slurry is prepared by blending and kneading a mixture of the cathode active substance powder 11, the conductive additive 12, the binder 13 and the solid electrolyte 14, and the slurry is pressed (guided) into the gaps between the sheet metal fibers A. The sheet metal fibers A can be also pressed into the slurry. The slurry can be either undried slurry or dried slurry. The slurry can be further guided by pressurizing. The drying step of the dried slurry can be further conducted after the slurry is guided. Thus, a state in which the cathode active substance powder 11 and the solid electrolyte 14 in the slurry are contacted with the metal fiber A is formed.

It should be noted that under a condition of using the metal fiber A as the long fiber, the sheet metal fiber A further can serve as a part of or all of the cathode current collector 1 to play a role.

In addition, under the condition of using the metal fiber A as the short fibber, the cathode current collector 1 further can be a sheet formed by the metal fiber A.

It should be noted that under the condition of using the metal fiber A as the long fibber, the content (weight%) of the cathode active substance powder 11 and the solid electrolyte 14 in the cathode layer 2 is preferably over 80 weight%, more preferably over 85 weight%. The content of the cathode active substance powder 11 is fpreferably over 65 weight%, more preferably over 70 weight%. On the other hand, the content of the solid electrolyte 14 is preferably over 10 weight%, more preferably over 15 weight%. The content (weight%) of the metal fiber A in the cathode layer 2 is further preferably over 5 weight%, more preferably over 10 weight% and further preferably less than 12%. Besides, the cathode layer is occupied by the conductive additive 22, the binder 23 and the like.

### [Formation of the anode layer when the metal fiber A as the long fiber is used]

First, the metal fiber A is manufactured to a sheet such as a nonwoven fabric. Then, the slurry is prepared by blending and kneading a mixture of the anode active substance powder 21, the conductive additive 22, the binder 23 and the solid electrolyte 24, and the slurry is pressed (guided) into the gaps between the sheet metal fibers A. The sheet metal fibers A can be also pressed into the slurry. The slurry can be either undried slurry or dried slurry. The slurry can be further guided by pressurizing. The drying step of the dried slurry can be further conducted after the slurry is guided. By the process, a state in which the anode active substance powder 21 and the solid electrolyte 24 in the slurry are contacted with the metal fiber A is formed.

It should be noted that under a condition of using the metal fiber A as the long fiber, the sheet metal fiber A further can serve as a part of or all of the anode current collector 5 to play a role.

In addition, under the condition of using the metal fiber A as the short fibber, the anode current collector 5 further can be a sheet formed by the metal fiber A.

It should be noted that under the condition of using the metal fiber A as the long fibber, the content (weight%) of the anode active substance powder 11 and the solid electrolyte 14 in the cathode layer 4 is preferably over 80 weight%, more preferably over 85 weight%. The content of the cathode active substance powder 11 is preferably over 65 weight%, more preferably over 70 weight%. On the other hand, the content of the solid electrolyte 14 is preferably over 10 weight%, more preferably over 15 weight%. The content (weight%) of the metal fiber A in the anode layer 4 is further preferably over 5 weight%, more preferably over 10 weight% and further preferably less than 12%. Besides, the cathode layer is occupied by the conductive additive 22, the binder 23 and the like.

### [Formation of the solid electrolyte layer]

, Drying, pressurizing in the die, roller pressurizing and the like the liquid state or gelatinous slurry which is manufactured by blending and kneading the mixture of the powdery solid electrolyte 34 and the binder 33, thereby obtaining the solid electrolyte layer 3 with a predetermined thickness. The solid electrolyte layer 3 can be a known solid electrolyte layer. In addition, the solid electrolyte layer 3 further can be a known gelatinous solid electrolyte layer.

### [Formation of an electrical storage element]

The cathode layer 2, the solid electrolyte layer 3 and the anode layer 4 manufactured above are overlapped and pressurized, such that the cathode layer 2 is combined with the solid electrolyte layer 3, and the solid electrolyte layer 3 is combined with the anode layer 4. In addition, as required, the cathode current collector 1 and the cathode layer 2 are overlapped, and the anode current collector 5 and the anode layer 4 are overlapped. Thus, the electrical storage element BE is formed. As shown in the Fig. 1, the electrical storage elements BE are overlapped with a required quantity to form the full-solid battery.

### (Conductive additive)

The conductive additives 12 and 22 are added in most conditions to improve the conductivity of the cathode and the anode. The conductive additives 12 and 22 are conductive powder. Usually, the conductive additive is carbon serial powder including graphite, carbon black, or acetylene black and the like, and can also be carbon serial powder adding metal powder such as Ni, Fe, Co and Ag, and further adding oxides such as WO₃ and SnO₃ and the like. The conductive additives 12 and 22 can be known conductive additives used in the secondary battery and the capacitor. For example, the conductive additives further can be coke, a sintered body of an organic high molecular compound, a carbon fiber, a carbon nanofiber with the average less than 0.5 µm and the like.

### (Solid electrolyte)

The solid electrolytes 14, 24 and 34 as well as the electrolyte of LiB exist in the whole battery to transfer ions between the cathode layer 2 and the anode layer 4. Materials of the solid electrolytes 14, 24 and 34 can be following inorganic solid electrolytes and high molecular solid electrolytes.

The inorganic solid electrolytes can be nitrides, halides, silicide and the like of Li (lithium) such as Li₃N, Lil, Li₃N-Lil-LiOH, LiSiO₄, LiSoO₄-Lil-LiOH, Li₃PO₄-Li₄SiO₄ and Li₂SiS₃. In addition, the inorganic solid electrolytes can be lithium-containing phosphoric compounds with NASICON (sodium superionic conductors), the chemical formula: LixMy(PO₄)₃. x is greater than or equal to 1 but less than or equal to 2, y is greater than or equal to 1 but less than or equal to 2 and M can be a substance formed by Al, Ti, Ge, Ga and the like. In addition, P can be replaced by Si and B, too.

The high molecular solid electrolytes can be polyethylene oxide derivatives, polypropylene oxide derivatives, phosphate polymers and the like.

### (Binder)

A resin of the hot melted binders 13, 23 and 33 can be polyethylene, ethylene vinyl acetate, polyvinylidene fluoride and the like. For example, the binders 13, 23 and 33 can be cellulose ether compounds such as carboxymethylcellulose, rubber serial binders such as styrene-butadiene copolymer rubber. It should be noted that known binders used in the secondary battery and the capacitor can be used.

The inventor confirms that according to the method for manufacturing the short fiber with relatively high caliber precision, the fiber obtained by cutting the long fiber manufactured by the coil cutting method into about several mm can be used, and the short fiber manufactured by the method is used in the embodiment this time.

### (Examples)

### (Manufacturing of the cathode layer)

The cathode active substance powder 11 is LiCoO₂ with the grain size of 10-15 µm purely like LiB, the solid electrolyte 14 is a commercially available LixMy(PO₄)₃ serial substance (the grain size is 5µm), the conductive additive 12 is acetylene black, the binder 13 is polyvinylidene fluoride diluted with NMP (n-methyl pyrrolidone). Aluminum fibers with an average diameter of 20µm and the average length less than 5 mm (for example, 2 mm) are added thereinto, such that the cathode material is manufactured from the cathode active substance powder 11, the solid electrolyte 14, the conductive additive 12, the binder 13 and the aluminum short fiber A at a dry weight ratio of 70: 18: 5: 2: 5.

The cathode material is coated to the aluminum foil which is 15 µm thick with the thickness of 50 µm as the cathode layer 2.

### (Manufacturing of the anode layer)

The anode active substance powder 21 is LiTiO₄ powder with the grain size of 10-15 µm, and the solid electrolyte 24, the conductive additive 22, the NMP diluted binder 23 and the aluminum short fiber A as same as those in the cathode layer are added at a dry weight ratio of 70: 18: 5: 2: 5 to manufacture the anode material.

The anode material is coated to the aluminum foil which is 15 µm thick with the thickness of 50 µm as the anode layer 4.

### (Manufacturing of the solid electrolyte layer)

The solid electrolyte layer 3 is the commercially available LixMy(PO₄)₃ serial substance (the grain size is 5µm), and the NMP diluted polyvinylidene fluoride binder 33 is added into the solid electrolyte layer. The solid electrolyte slurry is manufactured by the solid electrolyte 34 and the polyvinylidene fluoride binder 33with a dry weight ratio of the solid electrolyte 34 to the polyvinylidene fluoride binder 33 being 97: 3. 50µm solid electrolyte slurry is coated to a sheet of polyimide to manufacture the solid electrolyte layer 3.

### (Manufacturing of battery)

The cathode layer 2, the solid electrolyte layer 3 and the anode layer 4 are overlapped, pressed at about 200 °C, and heated at a temperature of 250°C for 1 hour to manufacture a single battery (the electrical storage element BE). A plurality of same single batteries are manufactured and are laminated as shown in the Fig. 1, and the upper and lower surfaces are clamped with a SUS (stainless steel) foil (20µm) 6 and are fixed and then are closed in a laminating container. By laminating three single batteries, an about 200mAh solid battery is manufactured.(Comparative example)

In comparison, the same full-solid battery (three-laminated battery about 200 mAh as well) is manufactured without adding the meal fiber A into the cathode layer 2 and the anode layer 4.(Battery characteristic evaluation)

In a trial-manufacture battery with or without the metal fiber A, 100mAh is set as a constant current within a voltage range of upper limit 4.2 V and lower limit 3V, thereby implementing charge and discharge testes. The result shows that both are batteries having a theoretical capacity about 180mAh. Then, a cycle characteristic test is implemented by utilizing the batteries at the condition above to test the capacity retention rate, the result shows that the battery blended with the metal fiber (short aluminum fiber) A is maintained at about 85% and the battery without the metal fiber is reduced to 60%. Thus, it is confirmed that the present disclosure can improve the battery characteristics of the full-solid battery. If the cathode layer 2 and the anode layer 4 contain the metal fiber A, the cathode active substance powder 11, the anode active substance powder 21 and the solid electrolytes 14 and 24 can be maintained electrical contact with the metal fiber A even if the cathode layer 2 and the anode layer4 expand or shrink due to charge and discharge. The electrical contact is sometimes conducted via the conductive additives 12 and 22. Thus, it is considered that the cycle characteristic of the test-manufacture battery containing the metal fiber A becomes good. Here, the metal fiber A is a substance with elastic deformation. Thus, the cathode layer 2 and the anode layer 4 are affected by elasticity of the metal fiber, too. That is, the cathode layer 2 is likely to expanding and shrinking following the anode layer 4, and the anode layer 4 is further likely to expanding and shrinking following the cathode layer 2. It is inferred one of reasons that the cycle characteristic of the test-manufacture battery containing the metal fiber A becomes good.

It should be noted that the electrical storage element BE or the full-solid battery is manufactured while the cathode layer 2 and the anode layer 4 are slightly compressed to deform. In this case, the metal fiber A in the cathode layer 2 and the anode layer 4 is applied to deform in advance, and the metal fiber A deforms elastically in advance. Thus, the cathode layer 2 is more likely to expanding and shrinking following the anode layer 4, and the anode layer 4 is further likely to expanding and shrinking following the cathode layer 2. The cathode layer 2 and the anode layer 4 of the electrode of the electrical storage device as the embodiment include the metal fiber A, the adsorbing substance powder adsorbing electrolyte ions during charging and discharging or the active substance powder 11 and 21 which is subjected to a chemical reaction during charging and discharging and the powdery solid electrolytes 14 and 24. In addition, the adsorbing substance powder or the active substance powder 11 and 21 are contacted with the metal fiber A, and the solid electrolytes 14 and 24 are also contacted with the metal fiber A. The composition is favorable to maintain electrical contract of the active substance powder 11 and 21, the solid electrolyte s14 and 24 and the metal fiber A during expansion or shrinkage of the cathode layer 2 and the anode layer 4 during charging and discharging. The cathode layer 2 of the electrical storage device as the embodiment includes the metal fiber A, the adsorbing substance powder adsorbing electrolyte ions during charging and discharging or the active substance powder 11 which is subjected to a chemical reaction during charging and discharging and the powdery solid electrolyte 14. In addition, the anode layer 4 of the electrical storage device in the embodiment includes the metal fiber A, the adsorbing substance powder adsorbing electrolyte ions during charging and discharging or the active substance powder 21 which is subjected to a chemical reaction during charging and discharging and the powdery solid electrolytes 24. In addition, the electrical storage device of the embodiment includes the solid electrolyte layer 3 with the powdery solid electrolyte 34, and the solid electrolyte layer 3 is configured between the cathode layer 2 and the anode layer 4. The metal fiber A is the substance which deforms elastically, and therefore, the cathode layer 2 and the anode layer4 are further affected by elasticity of the metal fiber. That is, the cathode layer 2 is likely to expanding and shrinking following the anode layer 4, and the anode layer 4 is further likely to expanding and shrinking following the cathode layer 2. In addition, in the embodiment, the melted metal is sprayed to the space from the micropores 42a to manufacture the metal fiber A of the short fiber with the average length less than 25 mm. According to the manufacturing method, the metal fibers A as the short fibers can be easily manufactured on a large scale. It is favorable to lower the manufacturing cost of the electrode and the electrical storage device. In addition, in the embodiment, the metal fiber A as the short fiber or the long fiber is manufactured by utilizing the coil cutting method. Thus, the diameter of the metal fiber A is stable, and thus, the elasticity generated by the metal fiber A is stable, too. It is favorable to improve the cycle characteristic of the electrical storage device. It should be noted that in the embodiment, under a condition that the section shape of the metal fiber A is not round, the term 'diameter' means thickness of the metal fiber A. In addition, in the embodiment, if the carbon fiber with the diameter less than 0.5 µm is added as the conductive additive, the active substance powder 11 and 21, the solid electrolytes 14 and 24 and the metal fiber A are electrically connected via the carbon fiber even if the active substance powder 11 and 21, the solid electrolytes 14 and 24 and the metal fiber A are contacted indirectly. The composition is favorable to improve the cycle characteristic of the electrical storage device. It should be noted that in the embodiment, the full-solid lithium ion secondary battery example is described, but the structure can be applied to the full-solid lithium ion secondary battery. In this case, the cathode active substance powder 11 can be a transitional metal oxide such as NaFe_{0.5}Mn_{0.5}O₂, a ceramic material and the like. In addition, the anode active substance powder 21 can be a carbon material such as carbon block, a titanic oxide and the like. The cathode active substance powder 11 and the anode active substance powder 21 can be known active substance powder used in the sodium ion secondary battery. In addition, the inorganic solid electrolyte can be a known electrolyte such as NaPF₆ and NaTFSA used in the sodium ion secondary battery. In addition, the structure can be further applied to the full-solid magnesium ion secondary battery. In this case, MgFeSiO₄ can be used as the cathode active substance powder 11 and magnesium can be used as the anode active substance powder 21. The cathode active substance powder 11 and the anode active substance powder 21 can be known active substance powder used in the sodium ion secondary battery. In addition, the inorganic solid electrolyte can be a known electrolyte such as Mg(TFSI)₂ used in the magnesium ion secondary battery. In addition, the structure can be further applied to the air battery.

In addition, the structure can be further applied to a double electrical layer capacitor of the electrical storage device. In this case, powder of activated carbon (adsorbing substance powder) is used to replace the cathode active substance powder 11 and powder of activated carbon (adsorbing substance powder) is used to replace the anode active substance powder 21. In addition, the solid electrolyte layer 3 can be an alginate gel (Alg/EMImBF). Known adsorbing substance powder used in the double electrical layer capacitor can be further used to replace powder of activated carbon and known electrolytes used in the double electrical layer capacitor can be further used. In addition, the structure can be further applied as a lithium capacitor of the electrical storage device. In this case, powder of activated carbon (adsorbing substance powder) is used to replace the cathode active substance powder 11 and powder of carbon-serial materials such as graphite doped with lithium are used to replace the anode active substance powder 21. In addition, the solid electrolyte layer 3 can be an alginate gel (Alg/EMImBF). Known adsorbing substance powder used in the lithium ion capacitor can be further used to replace powder of activated carbon and known electrolytes used in the lithium ion capacitor can be further use.

### Symbol description:

1, cathode current collector; 2, cathode layer; 3, solid electrolyte layer; 4, anode layer; 5, anode current collector; 6, SUS foil; 11, cathode active substance powder; 12, conductive additive; 13, binder; 14, solid electrolyte; 21, anode active substance powder; 22, conductive additive; 23, binder; 24, solid electrolyte; A, metal fiber; BE, electrical storage element.

## Claims

1. An electrode of an electrical storage device, the electrical storage device utilizing a solid electrolyte, the electrode of the electrical storage device comprising:
a metal fiber;
an adsorbing substance powder or an active substance powder contacted with the metal fiber, the adsorbing substance powder being an adsorbing substance powder which adsorbs electrolyte ions during charging and discharging, and the active substance powder being an active substance powder which is subjected to a chemical reaction during charging and discharging; and
a powdery solid electrolyte contacted with the metal fiber.

2. An electrical storage device, comprising:
a cathode layer, the cathode layer comprising: a metal fiber; an adsorbing substance powder or an active substance powder contacted with the metal fiber and a powdery solid electrolyte contacted with the metal fiber, the adsorbing substance powder being an adsorbing substance powder which adsorbs electrolyte ions during charging and discharging, and the active substance powder being an active substance powder which is subjected to a chemical reaction during charging and discharging;
an anode layer, the anode layer comprising: a metal fiber; an adsorbing substance powder or an active substance powder contacted with the metal fiber and a powdery solid electrolyte contacted with the metal fiber, the adsorbing substance powder being an adsorbing substance powder which adsorbs electrolyte ions during charging and discharging, and the active substance powder being an active substance powder which is subjected to a chemical reaction during charging and discharging;
a solid electrolyte layer, the solid electrolyte layer comprising the powdery solid electrolyte, and
the solid electrolyte layer being configured between the cathode layer and the anode layer and being contacted with the cathode layer and the anode layer.

3. The electrical storage device according to claim 2, wherein
a non-woven fabric utilizing a long fiber or a short fiber with an average length smaller than 5 mm is utilized as the metal fiber.

4. A method for manufacturing a cathode layer or an anode layer of an electrical storage device, comprising:
a slurry manufacturing step: manufacturing liquid state or gelatinous slurry, the slurry comprising a metal fiber of short fiber with an average length less than 25 mm, an adsorbing substance powder adsorbing electrolyte ions during charging and discharging or the active substance powder subjected to a chemical reaction during charging and discharging, a powdery solid electrolyte and a binder;
a shaping step: shaping the slurry into a predetermined shape; and
a drying step: at least drying the slurry shaped into the predetermined shape to form the cathode layer or the anode layer.

5. A method for manufacturing a cathode layer or an anode layer of an electrical storage device, comprising:
a sheet forming step: manufacturing a sheet of a metal fiber of a long fiber with an average length greater than 25 mm;
a slurry manufacturing step: manufacturing liquid state or gelatinous slurry, the slurry comprising an adsorbing substance powder adsorbing electrolyte ions during charging and discharging or an active substance powder subject to a chemical reaction during charging and discharging, a powdery solid electrolyte and a binder;
a guiding step: guiding the slurry into the sheet metal fiber; and
a drying step: at least drying the slurry to form the cathode layer or the anode layer.

6. The method for manufacturing a cathode layer or an anode layer of an electrical storage device according to claim 4 or 5, wherein
the metal fiber is manufactured by spraying a melted metal to a space from a micropore.

7. The method for manufacturing a cathode layer or an anode layer of an electrical storage device according to claim 4, wherein
the metal fiber is manufactured by utilizing a chatter cutting method.

8. The method for manufacturing a cathode layer or an anode layer of an electrical storage device according to claim 4 or 5, wherein
the metal fiber is manufactured by utilizing a coil cutting method.

9. The method for manufacturing a cathode layer or an anode layer of an electrical storage device according to claim 5, wherein
the slurry is pressed into the sheet metal fiber or the sheet metal fiber is pressed into the slurry to guide the slurry into the sheet metal fiber.

10. The method for manufacturing a cathode layer or an anode layer of an electrical storage device according to claim 4, wherein
the slurry is manufactured by utilizing the metal fiber with an average length less than 3 mm and a diameter less than 30 µm, and the slurry is shaped into the predetermined shape by coating the slurry onto a cathode current collector or an anode current collector.

11. The method for manufacturing a cathode layer or an anode layer of an electrical storage device according to any one of claims 4-10, wherein
in the slurry manufacturing step, a carbon fiber with an average diameter less than 0.5 µm is added.
